(19) Europäisches Patentamt / European Patent Office / Office européen des brevets

(11) **EP 2 400 792 B1**

(12) **EUROPEAN PATENT SPECIFICATION**

(45) Date of publication and mention of the grant of the patent:
**18.10.2017 Bulletin 2017/42**

(51) Int Cl.:
**H04W 28/06** *(2009.01)* **H04W 84/18** *(2009.01)*

(21) Application number: **10167525.4**

(22) Date of filing: **28.06.2010**

(54) **Method and system for deriving an aggregation delay for packet aggregation in a wireless network**

Verfahren und System zum Ableiten einer Aggregationsverzögerung zur Paketaggregation in einem drahtlosen Netzwerk

Procédé et système de dérivation d'un délai d'agrégation pour l'agrégation de paquet dans un réseau sans fil

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**28.12.2011 Bulletin 2011/52**

(73) Proprietor: **Deutsche Telekom AG**
**53113 Bonn (DE)**

(72) Inventors:
- **Kassler, Andreas**
  **65635 Karlstad (SE)**
- **Dely, Peter**
  **65363 Karlstad (SE)**
- **Bayer, Nico**
  **61231 Bad-Nauheim (DE)**
- **Sivchenko, Dimitry**
  **64285 Darmstadt (DE)**
- **Einsiedler, Hans Joachim**
  **13189 Berlin (DE)**

(74) Representative: **Vossius & Partner**
**Patentanwälte Rechtsanwälte mbB**
**Siebertstrasse 3**
**81675 München (DE)**

(56) References cited:
- OKECH J ET AL: "Link-Based VoIP Aggregation in Mesh Networks", NEW TECHNOLOGIES, MOBILITY AND SECURITY, 2008. NTMS '08, IEEE, PISCATAWAY, NJ, USA, 5 November 2008 (2008-11-05), pages 1-5, XP031366575,
- KYUNGTAE KIM ET AL: "VoMESH: voice over wireless MESH networks", WIRELESS COMMUNICATIONS AND NETWORKING CONFERENCE, 2006. WCNC 2006. IE EE LAS VEGAS, NV, USA 3-6 APRIL 2006, PISCATAWAY, NJ, USA,IEEE, PISCATAWAY, NJ, USA, 3 April 2006 (2006-04-03), pages 193-198, XP031331302, DOI: DOI:10.1109/WCNC.2006.1683463 ISBN: 978-1-4244-0269-4
- BAYER N ET AL: "VoIP Service Performance Optimization in Pre-IEEE 802.11S Wireless Mesh Networks", CIRCUITS AND SYSTEMS FOR COMMUNICATIONS, 2008. ICCSC 2008. 4TH IEEE INTERNATIONAL CONFERENCE ON, IEEE, PISCATAWAY, NJ, USA, 26 May 2008 (2008-05-26), pages 75-79, XP031268657, ISBN: 978-1-4244-1707-0
- KASSLER A ET AL: "VoIP Aggregation based on Link Quality Metric for Multihop Wireless Mesh Networks", PROCEEDINGS OF THE FUTURE TELECOMMUNICATION CONFERENCE, BEIJING, CHINA, 1 October 2007 (2007-10-01), pages 1-6, XP002520933,

EP 2 400 792 B1

**Description**

The present invention relates to a method for deriving an aggregation delay for packet aggregation in a wireless network and a corresponding system. The present invention specifically relates to a method and system to derive the optimal aggregation delay based on dynamically changing channel status in a wireless network, which is preferably an IEEE 802.11 based network.

Wireless mesh networks (WMNs) are considered to be a promising technology for cost-efficient proliferation of Internet access in both sparse rural areas as well as in densely populated urban areas. In a WMN mesh routers relay traffic on behalf of clients or other routers and by this form a wireless multi-hop network. For cost reasons, most WMNs are based on IEEE 802.11 standards. The IEEE 802.11 standard is also known as WLAN (Wireless Local Area Network) or Wi-Fi (Wireless Fidelity). IEEE 802.11 hardware is cheap and operates in license free bands. However, the performance of IEEE 802.11-based WMNs can be quite poor. One reason is that IEEE 802.11 handles small packets inefficiently. The transmission time of a 100 byte packet sent at 54 Mbit/s consists to 95% of overhead created by the backoff, DIFS (Distributed Inter.frame Space), the PLCP (Physical Layer Convergence Protocol) preamble, PHY and MAC (Medium Access Control) header, SIFS (Short Interframe Space) and the ACK (acknowledgement).
Increased PHY data rates shorten the data transmission time, but yield a higher overhead. Furthermore, as reported by John, Wolfgang and Tafvelin, Sven, Analysis of internet backbone traffic and header anomalies observed, ACM (2007), pp. 111-116, a fairly high share of Internet traffic consists of small packets, for example VoIP (Voice over IP) or gaming, DNS (Domain Name Service) requests or TCP (Transmission Control Protocol) ACKs. As a consequence, it is important to increase the efficiency of the transmission of small packets.

One possibility to increase the efficiency is to aggregate small data frames or IP packets into larger units at the sender and to transmit them at once. The receiver de-aggregates the packets and processes them normally. This reduces the overhead and leads to a higher capacity. If a sender aggregates MAC-frames, the scheme is called "frame aggregation". If it aggregates IP packets it is named "packet aggregation". In the present specification "packet aggregation" is described as an example. However, the described mechanisms can be used to aggregate MAC-frames as well.

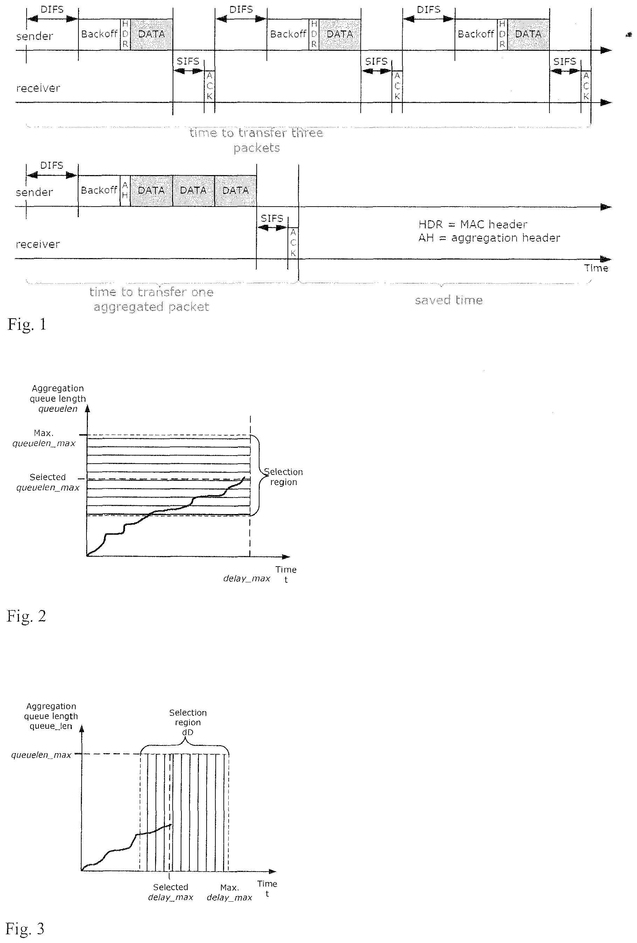

Fig. 1 depicts an example transmission of three packets without and with aggregation. The packets are concatenated and an aggregation header is appended to the aggregated packet that informs the receiver how to de-aggregate the packets.

More specifically, Fig. 1 shows in the upper part the transmission of three successively following packets and the respective time required at the sender side and the receiver side. In this example at the sender side the time for DIFS, Backoff, HDR (MAC header) and DATA and at the receiver side SIFS and ACK is indicated. In the lower part of Fig. 1 the three packets are combined into one aggregated packet and a respective time to transfer one aggregated packet and the save time is shown. The time to transfer one aggregated packet comprises in this example DIFS, Backoff, AH (aggregation header) and three DATA blocks at the sender side and SIFS and ACK at the receiver side.

EP 1 492 285 B1 relates to a packet aggregation for real time services on packet data networks. According to this known method a time delay-tolerant information shall be transmitted over a communication system at a rate other than the fixed rate of the time delay-intolerant information. The time delay tolerant information is transmitted in aggregated form, by combining a plurality of packets to form an aggregate packet. The aggregate packet is based on user service requirements criteria, such as channel availability, channel conditions, user priority and similar such parameters while maintaining the time delay requirements of the information. Further criteria may be the allowed transmission rate at which information can be transmitted at the point in the communication system. The size of the aggregated packet is based on a negotiation between the transmitting equipment and receiving equipment. The size of the aggregated packet can be determined on a static or dynamic basis. The transmitting equipment has an aggregator for aggregating packets of information based on user service requirements and for transmitting the aggregated packets to a receiving equipment. The receiving equipment comprises a de-aggregator circuit that receives aggregated packets and generates individual packets therefrom.

Okech J. et al: "Link-Based VoIP Aggregation in Mesh Networks", New Technologies, Mobility and Security, 2008, NTMS 2008, IEEE, 5 November 2008 (2008-11-05), pages 1-5, XP031366575 relates to a link-based aggregation approach. The proposed algorithm varies the maximum size an aggregated packet should have in response to link characteristics. Its performance improvement is compared with those of fixed aggregation and performance under standard access network.

Kyungtae Kim et al: "VoMesh: voice over wireless mesh networks", wireless communications and networking conference, 2006, WCNC 2006, IE EE Las Vegas, NV, USA 3-6 April 2006, pages 193-198, XP031331302, ISBN: 978-4244-0269-4 relates to voice over IP in 802.11b wireless mesh networks. Usage of packet aggregation and header compression is investigated as methods for increasing capacity. A distributed multihop aggregation algorithm is presented. A zero-length header compression algorithm integrated with packet aggregation is proposed.

Bayer et al: "VoIP Service Performance Optimization in Pre-IEEE 802.11 S Wireless Mesh Networks" Circuits and Systems for communications, 2008, ICCSC 2008, 4th IEEE International Conference on, pages 75-79, XP031268657 relates to a feasibility study of VoIP in a dual radio mesh environment. The Problem that small voice packets introduce a high overhead leading to a low voice capacity of 802.11 based mesh networks is addressed. A novel packet aggregation mechanism is presented and evaluated.

Kassler et al: "VoIP aggregation based on link quality metric for multihop wireless mesh networks.", Proceedings of the future telecommunication conference, Beijing, China, 1 October 2007 (2007-10-01), pages 1-6, XP002520933 relates to an adaptive hop-by-hop aggregation scheme that calculates target aggregation sizes per each hop based on wireless link characteristics.

US 2007/0211682 A1 describes an aggregation stream for a wireless multi-hop mesh networks. An aggregator at each node of the network operates to merge voice over IP (VoIP) at a source node with the forced delay, but at an intermediate node aggregated packets are either sent directly to the destination or to the next hop without deaggregation. This document further discloses a compression mechanism for compressing and decompressing the aggregated packets.

WO 2005/112355 A1 discloses a method and a system for transmission of an aggregation of packets which includes a plurality of medium access control (MAC) protocol units (MPDUs) or PLCP (physical layer convergence protocol) protocol data units (PPDUs) intended for one or several receivers and transmitted at one or several different physical (PHY) rates. This document also discloses certain frame definitions. It specifically suggests to use identifiers of the intended receivers of the aggregate and the position of the MPDUs or PPDUs inside the aggregate. Furthermore, the different data rates at which the MPDUs or PPDUs will be transmitted shall be announced.

EP 1 465 368 B1 relates to a traffic monitoring system in a packet switch network with wireless connected data aggregation node.

While the basic principle of packet aggregation is simple, the details of operating an aggregation mechanism are not. Usually, the following algorithm (or a variant) is used: collect packets up to a desired total size, aggregate and send them. Furthermore, packets can be delayed artificially, such that units of the desired size can be created. This leads to the following questions:

1. What is the optimum packet size for the aggregation?
2. For how long packets should be delayed, i.e. what is the maximal delay of an aggregation queue for the packet collection prior to the transmission of an aggregated packet?

The IEEE 802.11e and 802.11n standards specify aggregation mechanisms (block-ACKs or A-MPDU/A-MSDU). In 802.11n, selecting the maximum aggregation size or aggregation delay is implementation specific. Usually, frames are only aggregated if they are available in the queue as soon as a station gets a transmission opportunity.

All or some nodes within a wireless network are equipped with one or multiple aggregation queues for each neighbour or final destination of the packet. The state of every aggregation queue is described by two quantities: *queuelen* and *queuedelay*. The *queuelen* is the length of the queue in bytes (or packets). The *queuedelay* is the time the oldest packet has been waiting in the queue. A queue controller measures those two quantities and can trigger an "aggregate and send"-action if either exceeds a predefined threshold. All packets in the queue are aggregated and ready to send.

Fig. 2 and 3 illustrate the threshold parameter selection for packet aggregation. These figures show increase of the aggregation queue on a WLAN node in the time.

Fig. 2 shows the case where the aggregation process is controlled within a selection region by the adjustment of the aggregation queue length threshold *queuelen_max.* The maximum value for *queuelen_max* must not exceed the MTU (Maximal Transmission Unit) of the network interface used for the transmission of aggregated packets. The maximal aggregation delay *delay_max* is limited by the QoS requirements of the application whose packets are aggregated. For example, VoIP applications are delay sensitive. If the end-to-end delay of a VoIP flow exceeds 250 ms, the perceived quality is noticeable degraded. Even if packet aggregation by delaying packets would increase the total number of possible VoIP sessions, the users would be dissatisfied and the transmitted data would be of no use. Thus, it is important, that packet aggregation only delays packets when necessary. However if the queue length grows slowly, by using the adaptation of *queuelen_max*, packets must often wait until *delay_max.*

Indeed, by adjusting the aggregation delay delay_max as shown in Fig. 3, delay sensitive applications such as VoIP can be served with a higher quality when delay_max is selected carefully: High values for delay_max will result in many aggregation opportunities. This reduces overheads and thus reduces the overall network load. In contrast, small aggregation delays only create few aggregation opportunities and thus the reduction in network load is small. A static selection of the aggregation delay delay_max does not provide optimal performance. In low loaded networks, it is not necessary to artificially delay packets, since the capacity is sufficient to support the current load. However, if the network is highly loaded, the aggregation delay must thus be adapted to the current load in the network.

The object of the present invention is to provide a method and system for deriving an aggregation delay for packet aggregation in a wireless network which provides optimal performance.

This object is solved by the features of the claims.

According to the present invention a new method and system is disclosed for deriving the optimal aggregation delay *delay_max* depending on the current network utilisation (load). According to the present invention fuzzy logic control is preferably used to tune *delay_max* to a value, which will result in a good throughput and low latency for the network.

According to an aspect of the present invention a method for deriving an aggregation delay for a packet aggregation in a wireless network comprises the step of deriving an optimal aggregation delay at a network node within the wireless network. The optimal aggregation delay is selected on the basis of information relating to the channel quality related parameters at the network node in the wireless network.

The information relating to the channel quality related parameters can be measured in the wireless environment based network node. As an example, the wireless network based on the IEEE 802.11 standard is used.

The information relating to the channel quality related parameters may comprise channel load reports comprising information regarding a current network load or more preferably a current channel busy fraction at said node. The channel quality related parameters can be based on the IEEE 802.11k standard.

According to a further aspect of the present invention a change of the current network load or a change of the channel busy fraction can be monitored and in response to such a change the optimal aggregation delay can be adapted.

According to a further aspect of the present invention the method comprises the step of exchanging information between network nodes, in particular the measured channel quality parameters. On the basis of this exchanged information a fairness factor is determined for deriving the aggregation delay for a specific network node.

As an example a busy ratio of the specific network node can be calculated as relation between the channel busy fraction of the specific network node and the current aggregation delay of said specific network node.

According to a further aspect a method comprises the steps of measuring a respective network load generated by one or a plurality of neighbour network nodes, receiving information relating to the maximum aggregation delay of each one of said neighbour network nodes, calculating a busy ratio of each one neighbour network node as a relation between the channel busy fraction and the maximum aggregation delay of each one neighbour network node. A ratio difference can be calculated on the basis of the average value of the busy ratio of all neighbour network nodes and the own busy ratio of a specific network node.

According to another aspect of the present invention a system for deriving an aggregation delay for a packet aggregation in a wireless network is described. The system comprises a controller for deriving an optimal aggregation delay at a network node depending on information relating to the channel quality related parameters at the network node in the wireless network.

The system can be implemented at several or all nodes in the wireless network.

The system comprises an aggregator for aggregating a plurality of normal data packets into aggregated packets which are sent out to other nodes. It further comprises a de-aggregator for de-aggregation of aggregated packets received from other nodes. A wireless input/output device is connected to the aggregator and the de-aggregator for performing communication to one or several other nodes, for example neighbour nodes.

The controller provides the information regarding the optimal aggregation delay to the aggregator. The controller receives information regarding the current network load from the wireless input/output device and is configured to monitor a change of the current network load. The optimal aggregation delay is adapted by the controller in response to a change of the current network load. Similarly, a change of the channel busy fraction can be monitored and used for the adaptation of the optimal aggregation delay.

According to another aspect the system further comprises an exchange device for exchanging measured channel quality parameters between neighbouring network nodes. On the basis of the information relating to the measured channel quality parameters the controller is configured to determine a fairness factor which can be used for deriving the aggregation delay for each one of the nei ghbour network nodes.

The controller may comprise a fuzzy logic system which is used for deriving the optimal aggregation delay based on the channel quality parameters.

The present invention will be further described by way of example with reference to the below discussed preferred embodiments and the drawing, in which:

Fig. 1 shows data transmission in WLAN without and with packet aggregation,
Fig. 2 shows a diagram illustrating packet aggregation by adjusting the aggregation queue length,
Fig. 3 shows a diagram illustrating packet aggregation by adjustment of the aggregation delay,
Fig. 4 shows a block diagram of an embodiment of a system according to a preferred embodiment of the present invention,
Fig. 5 shows a diagram illustrating an example of a dynamic system behaviour,
Fig. 6 illustrates a wireless network system of three nodes A, B and C and
Fig. 7 shows examples of membership functions.

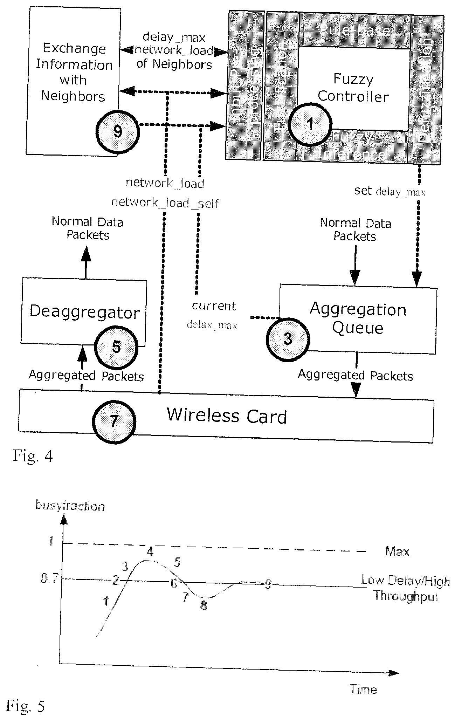

Fig. 4 shows the system for optimal selection and adaptation of aggregation queuing delay in dependence of the current network load.

The system comprises three parts: (1) the sending part, (2) the receiving part and the (3) signalling part. The sending part is the most complex one and consists of the Fuzzy Controller I as well as the Aggregation Queue 3. The Fuzzy Controller is the main part of the system that calculates the maximum aggregation delay and configures the Aggregation Queue accordingly. The Aggregation Queue itself concatenates packets with the same next-hop into one large packet. The receiving part comprises the De-aggregator 5 that takes the received packet from the Wireless Card 7 and de-aggregates the original data packets.

The signalling part comprises an exchange device 9 which provides information exchange between neighbouring nodes. This information serves as input for the Fuzzy Controller 1 in order to calculate the maximum aggregation delay.

The system as shown in Fig. 4 is implemented on every node that supports the aggregation mechanism. Depending on the current role of the node either the receiving part (node is receiving packets from a neighbour) or the sending part (node is sending packets to a neighbour) is active.

**Input to the fuzzy controller 1**

**1. Network load - *busyfraction.***

The channel busy fraction is used as an indicator for the system throughput and MAC layer service delay of the network. The channel busy fraction is obtained by sensing the medium. It is the fraction of the busy and idle periods. IEEE 802.11k (channel load reports) contain the channel busy fraction.

**2. Temporal change in network load - Δ*busyfraction***

Δ*busyfraction* denotes the change in *busyfraction* between current and previous execution of the fuzzy controller. Δ*busyfraction* is used to determine, whether the busyfraction is changing towards or away from the target value. Accordingly the controller can increase or decrease the value of the *delay_max* stronger or weaker.

**3. Aggregation delay and network load of the neighbours -** *ratiodifference*

It is used as a fairness factor. Nodes that insert more traffic than average into the network should be punished by using a higher *delay_max.* Therefore, a node measures not only how much traffic it generates itself, but also measures how much traffic is generated by its neighbours. Using the information exchange the node also knows about the aggregation delay *delay_max* used on its neighbours. This information is distributed in the network with aid of e.g. routing protocol deployed in the mesh network.

Using this information the node can calculate *ratiodifference.* The network is considered fair if the relation between the load generated by a node and its *delay_max* is the same on all nodes in the network. For example, this relation *busyfration_own* can be calculated as *busyratio_own* = *busyfraction_own/delay_max,* where *busyfraction_own* is the channel load caused by the traffic generated by the node itself. Then the aggregation fairness parameter *ratiodifference* can be calculated using the following formula:

$$ratiodifference = 1 - busyratio\_nb/busyratio\_own \qquad (1)$$

where *busyration_nb* is the average neighbour's busy ratio. Then *ratiodifference* = 0 indicates that nodes aggregate proportionally to the traffic they generate. Negative or positive values indicate the neighbours aggregate more or less (relative to the amount of traffic they generate). Appropriately, the node must also aggregate more or less so that all nodes aggregate proportionally to the generated traffic.

**4. Fuzzy rules and fuzzy membership functions**

*Fuzzy rules and fuzzy membership functions* define how the input parameters are considered to derive the output aggregation delay. The fuzzy controller can for example use fuzzy logic inference and center of gravity de-fuzzifcation to obtain the crisp output value of *delay_max.* Examples are described in IEC 61131-7 Programmable controllers - Part 7: Fuzzy control programming (2000).

**Controller output**

The output of the Fuzzy Controller of the proposed system is the value for the aggregation delay - the *delay_max* parameter. The controller 1 has an interface to the aggregation queue 3. After each controller execution, the controller sets this parameter.

**Determining the controller output**

Increasing *delay_max* reduces *busyfraction,* decreasing *delay_max* increases busyfraction. At the system setpoint (*busyfraction* is medium, centered at 0.7) the throughput is high and the MAC layer service delay is low. The dynamic system behaviour can be characterized by different zones, as displayed in the example in Figure 5 for the clarity. To achieve convergence, a node needs to consider the following rules: If busyfraction is low and not changing towards medium (zones 7/8 in the example), a node decreases *delay_max.* If *busyfraction* is high and not changing towards medium (zones 3/4 in the example), a node increases *delay_max.* If *busyfraction* is medium but increasing or decreasing (zones 2/6 in the example), a node decreases or increases *delay_max* accordingly. Only, if *busyfraction* is changing towards medium (zones 1/5 in the example) or *busyfraction* is already medium and not changing (zone 9 in the example), *delay_max* remains unchanged.

If all nodes aggregate similarly much, *delay_max* can be calculated using *busyfraction* using the rules mentioned above. Otherwise the input parameter *ratiodifference* comes in to play: If *ratiodifference* is negative, i.e. the node aggregates little compared to its neighbours, *delay_max* must be increased a little despite of the *busyfraction* or Δ*busyfraction.* On the opposite, if a node aggregates more than the average, it reduces *delay_max* a little.

The membership functions assign linguistic labels such as "low", "medium" and "high" to a numeric value. The membership functions determine with what degree an input or output variable should be assigned to a linguistic label.

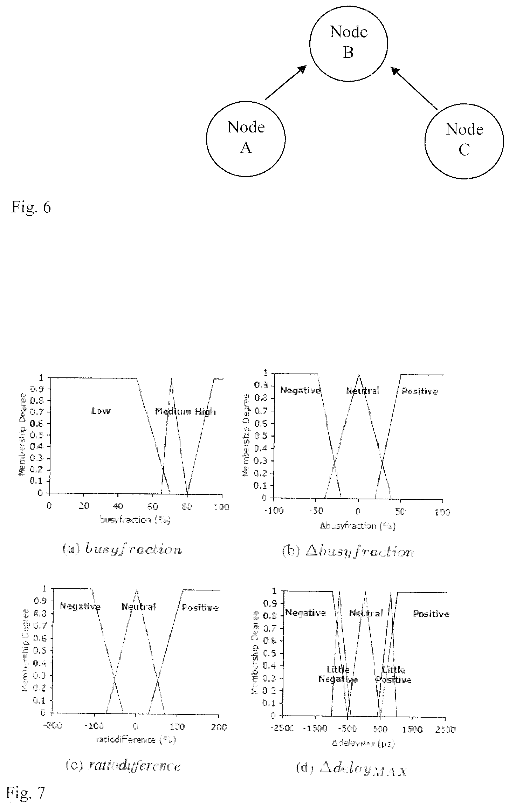

Examples for such membership functions are shown in Figure 7. Figure 7 (a) shows the membership degree from 0 to 1 for the ranges of the *busyfraction,* in percent. Values of 0 to 70% *busyfraction* are labelled as "low", values of 65% to 80% are labelled "medium" and values of 80% to 100% are labelled as "high". Figure 7 (b) shows the membership degree from 0 to 1 for the ranges of the Δ*busyfraction* in percent. Values of -100 to -20% Δ*busyfraction* are labelled as "Negative", values of -40% to 40% are labelled "Neutral" and values of 20% to 100% are labelled as "Positive". Figure 7 (c) shows the membership degree from 0 to 1 for the ranges of the *ratiodifference* in percent. Values of -200 to -20% *ratiodifference* are labelled as "Negative", values of -80% to 80% are labelled "Neutral" and values of 20% to 200% are labelled as "Positive". Figure 7 (d) shows the membership degree from 0 to 1 for the ranges of the Δ*delay_max* in μs. Values of -2500 to -500 μs for Δ*delay_max* are labelled as "Negative", values of -750 to -400 μs are labelled "Little Negative", values of -500 to 500 μs are labelled "Neutral", values of 400 to 750 μs are labelled "Little Positive", and values of 500 to 2500 μs are labelled as "Positive".

Using the process of fuzzy logic inference the controller maps the input values to the linguistic labels ("fuzzification"), selects which rules to apply and how strong they apply ("rule matching"). It calculates the output value using for example centre of gravity ("defuzzification").

**Examples**

In the following, a short example shows how the maximum aggregation delay *delay_max* is determined in real networks. This example uses membership functions from Fig. 7 and the rules in Tables 1-3. Further we assume a wireless network consisting of three nodes A, B and C (see Fig. 6), which all use the proposed fuzzy controlled aggregation system.

***Example 1***

At time t=0, all nodes are started and there is no traffic in the network. Initially, *delay_max* is set to 0. At t=10, node A starts sending data with 5 Mbit/s to B. It continuously senses the channel *busyfraction.* At time t=11, the fuzzy controller is executed. The input values for the fuzzy controller are: *busyfraction*=90%, Δ*busyfraction*=90%, *ratiodifference*=0. The controller first assigns membership values to each input variable:

- *busyfraction*: Low=0. Medium=0. High=0.9
- Δ*busyfraction*: Negative=0. Neutral=0, Positive=1
- *ratiodifference*: Negative=0, Neutral=0, Positive=0

It then matches which rules are active and how strong the match is: since the membership value of "Low" and "High" for *ratiodifference* is zero, only the rules in Table 2 apply. In Table 2 the controller selects intersection of the rows and columns, in which *busyfraction* and Δ*busyfraction* have membership values greater than 0 (for each possible combination). In this example, only *busyfraction* "High" and Δ*busyfraction* "Positive" have membership values greater than zero. Thus, from row 3 and column 3 of Table 2 one can take the output Δ*delay_max* is "Positive". To convert this output in to a real number, the controller calculates the centre of gravity under the function, which describes the "Positive". It calculates the centre of gravity according to section A.2.4 of "IEC 61131-7 Programmable controllers - Part 7: Fuzzy control programming (2000)". In this example, the centre of gravity is +1500. Finally, $delay\_max_{new}$ = $delay\_max_{old}$ + Δ$delay\_max$, i.e. $delay\_max_{new}$ = 0 + 1500. The controller thus sets the aggregation delay to 1500 μs.

At time t=13, the controller is executed again. Due to the increased aggregation delay, more packets are aggregated now and *busyfraction*=75%, Δ*busyfraction*=0%, *ratiodifference*=0. Again the rules in Table 2 apply. From Figure 7(a) one can take that the *busyfraction* is "Medium" and from Figure 7(b) one can take that the Δ*busyfraction* is "Neutral". From row 2 and column 2 of Table 2 one can take the output Δ*delay_max* is "Neutral". Thus, the controller executes the same procedure as before and determines in this case that *delay_max* should remain 1500μs.

### Example 2

Now consider a different example: At t=0, the nodes are initialized again. Then nodes A and C both start sending to node B at t=10. Node A sends 1 Mbit/s, node C sends 4 Mbit/s. After the first execution of the controller at t=11, both nodes set *delay_max* to 1500μs as it has been explained in Example 1. At the second execution at t=12, the busyfraction is 75%. However, the *ratiodifference* of the nodes A and C now is 75% and -300%, respectively. That means that node A proportionally has a too high aggregation delay, whereas node C has a too low delay. Now the rules in Tables 1 and 3 also apply. Since the *ratiodifference* for node A is 75%, one can take from Figure 7 (c) that the *ratiodifference* for node A is labelled "Positive". Thus, Table 3 applies. Node A matches the rules in row 2 and column 2 of Table 3 and one can take the output Δ*delay_max* is "Little Negative". Since the *ratiodifference* for node C is -300%, one can take from Figure 7 (c) that the *ratiodifference* for node C is labelled "Negative". Thus, Table 1 applies. Node B matches the rules in row 2 and column 2 of Table 1 and one can take the output Δ*delay_max* is "Little Positive". Following the same procedure as in Example 1, node A determines *delay_max* of 500μs, whereas node C sets *delay_max* to 2000μs.

#### Table 1 ratiodifference is Negative

| busyfraction | Δbusyfraction | | |
| --- | --- | --- | --- |
| | Negative | Neutral | Positive |
| Low | Little Positive | Little Positive | Little Positive |
| Medium | Little Positive | Little Positive | Little Positive |
| High | Little Positive | Little Positive | Little Positive |

#### Table 2 ratiodifference is Neutral

| busyfraction | Δbusyfraction | | |
| --- | --- | --- | --- |
| | Negative | Neutral | Positive |
| Low | Negative | Negative | Neutral |
| Medium | Negative | Neutral | Positive |
| High | Neutral | Positive | Positive |

#### Table 3 ratiodifference is Positive

| busyfraction | Δbusyfraction | | |
| --- | --- | --- | --- |
| | Negative | Neutral | Positive |
| Low | Little Negative | Little Negative | Little Negative |
| Medium | Little Negative | Little Negative | Little Negative |
| High | Little Negative | Little Negative | Little Negative |

The present invention has now been described with reference to several embodiments thereof. The foregoing detailed description and examples have been given for clarity of understanding only. No unnecessary limitations are to be understood therefore. It will be apparent to those skilled in the art that many changes can be made in the embodiments described without departing from the scope of the present invention. In particular, although features and elements of the present invention are described in the preferred embodiments, in particular combinations, each feature or element can be used alone without the other features and elements of the preferred embodiments or in various combinations with or without other features and elements of the invention. Therefore, the scope of the present invention should not be limited to the methods and systems described herein.

**Claims**

1. A method for dynamically deriving an aggregation delay for packet aggregation in a wireless network comprising the following step:

   deriving an optimal aggregation delay at a network node depending on information relating to channel quality related parameters at the network node in the wireless network, using a controller;
   wherein the information relating to channel quality related parameters is measured in the wireless environment based network node; and
   wherein the information relating to channel quality related parameters comprise channel load reports comprising information regarding a current network load.

2. Method according to claim 1 wherein the wireless environment based network node, is based on the IEEE 802.11 standard.

3. Method according to claim 2 wherein information regarding a current network load comprise a channel busy fraction, and wherein preferably the channel quality related parameters are based on the IEEE 802.11 k standard.

4. Method according to claim 3 further comprising the steps of:

   monitoring a change of the current network load, preferably a change of the channel busy fraction and
   adapting the optimal aggregation delay in response to a change of the current network load and a change of the channel busy fraction, respectively.

5. Method according to any of claims 1 to 4 further comprising the step of exchanging measured channel quality parameters between network nodes and determining a fairness factor to be used for deriving the aggregation delay for a specific network node.

6. Method according to any of claims 3 to 5 further comprising the step of:

   calculating a busy ratio of the specific network node as a relation between the channel busy fraction of the specific network node and the current aggregation delay of said specific network node.

7. Method according to claim 6 further comprising the steps of:

   measuring a respective network load generated by at least one neighbour network node of said specific network node,
   receiving information relating to the maximum aggregation delay of said at least one neighbour network node,
   calculating a busy ratio of said at least one neighbour network node as a relation between the channel busy fraction and the maximum aggregation delay of said at least one neighbour network node.

8. Method according to claim 7 further comprising the steps of:

   calculating a ratio difference by using the following formula:

$$\text{ratiodifference} = 1 - \text{busyratio\_nb}/\text{busyratio\_own}$$

   wherein busyratio_nb is the average value of the busy ratio of all neighbour network nodes and busyratio_own is the busy ratio of the specific network node, and
   adapting the maximum aggregation delay of the specific network node corresponding to the ratio difference.

9. Method according to any of claims 1 to 8 wherein the optimal aggregation delay is derived based on the channel quality related parameters using a fuzzy logic system.

10. Method according to any of claims 1 to 9 wherein the wireless network is adapted to apply single-hop or multi-hop communication.

11. System for dynamically deriving an aggregation delay for a packet aggregation in a wireless network comprising:

a controller for deriving an optimal aggregation delay at a network node depending on information relating to the channel quality related parameters at the network node in the wireless network;
wherein the information relating to channel quality related parameters is measured in the wireless environment based network node; and
wherein the information relating to channel quality related parameters comprise channel load reports comprising information regarding a current network load.

12. System according to claim 11 further comprising an aggregator for aggregating a plurality of normal data packets into aggregated packets,
a de-aggregator for de-aggregation of aggregated packets into said plurality of normal data packets, and
a wireless input/output device being connected to the aggregator and the de-aggregator.

13. System according to claim 12 wherein the controller provides the information regarding the optimal aggregation delay to the aggregator, wherein the controller receives information regarding the current network load from the wireless input/output device and wherein the controller is configured to monitor a change of the current network load, preferably a change of the channel busy fraction and to adapt the optimal aggregation delay in response to a change of the current network load and a change of the channel busy fraction, respectively.

14. System according to any of claims 11 to 13 further comprising an exchange device for exchanging measured channel quality parameters with at least one neighbour network node and wherein the controller is configured to determine a fairness factor to be used for deriving the aggregation delay to be set in the aggregator.

15. System according to claim 13 or 14 wherein the controller is configured to calculate a busy ratio of the specific node as a relation between the channel busy fraction and the current aggregation delay and wherein preferably the controller is configured to receive information regarding a respective network load generated by at least one neighbour network node and for receiving information relating to the maximum aggregation delay of said at least one neighbour network and for calculating a busy ratio of said at least one neighbour network node as a relation between the channel busy fraction and the maximum aggregation delay of said at least one neighbour network node.

16. System according to claim 15 wherein the controller is further configured to calculate a ratio difference by using the following formula:

$$\text{ratiodifference} = 1 - \text{busyratio\_nb}/\text{busyratio\_own}$$

wherein busyratio_nb is the average value of the busy ratio of all neighbour network nodes and busyratio_own is the busy ratio of the specific network node and to adapt the maximum aggregation delay of said specific network node corresponding to the ratio difference.

17. System according to any of claims 11 to 16 wherein the controller comprises a fuzzy logic system which derives the optimal aggregation delay based on the channel quality parameters.

**Patentansprüche**

1. Verfahren zum dynamischen Ableiten einer Aggregationsverzögerung zur Paketaggregation in einem drahtlosen Netzwerk, welches den folgenden Schritt aufweist:

Ableiten einer optimalen Aggregationsverzögerung an einem Netzwerkknoten abhängig von Informationen, die sich auf sich auf die Kanalqualität beziehende Parameter am Netzwerkknoten im drahtlosen Netzwerk beziehen, unter Verwendung einer Steuereinrichtung,
wobei die Informationen, die sich auf sich auf die Kanalqualität beziehende Parameter beziehen, im auf der drahtlosen Umgebung beruhenden Netzwerkknoten gemessen werden, und
wobei die Informationen, die sich auf sich auf die Kanalqualität beziehende Parameter beziehen, Kanallastberichte einschließen, die Informationen in Bezug auf eine aktuelle Netzwerklast aufweisen.

2. Verfahren nach Anspruch 1, wobei der auf der drahtlosen Umgebung beruhende Netzwerkknoten auf der IEEE-802.11-Norm beruht.

3. Verfahren nach Anspruch 2, wobei Informationen in Bezug auf eine aktuelle Netzwerklast einen Kanalbelegungsbruchteil einschließen und wobei die sich auf die Kanalqualität beziehenden Parameter vorzugsweise auf der IEEE-802.11k-Norm beruhen.

4. Verfahren nach Anspruch 3, welches ferner folgende Schritte aufweist:

   Überwachen einer Änderung der aktuellen Netzwerklast, vorzugsweise einer Änderung des Kanalbelegungsbruchteils, und
   Anpassen der optimalen Aggregationsverzögerung ansprechend auf eine Änderung der aktuellen Netzwerklast bzw. eine Änderung des Kanalbelegungsbruchteils.

5. Verfahren nach einem der Ansprüche 1 bis 4, welches ferner den Schritt des Austauschens gemessener Kanalqualitätsparameter zwischen Netzwerkknoten und des Bestimmens eines Fairness-Faktors, der für das Ableiten der Aggregationsverzögerung für einen spezifischen Netzwerkknoten zu verwenden ist, aufweist.

6. Verfahren nach einem der Ansprüche 3 bis 5, welches ferner folgenden Schritt aufweist:

   Berechnen eines Belegungsverhältnisses des spezifischen Netzwerkknotens als eine Beziehung zwischen dem Kanalbelegungsbruchteil des spezifischen Netzwerkknotens und der aktuellen Aggregationsverzögerung des spezifischen Netzwerkknotens.

7. Verfahren nach Anspruch 6, welches ferner folgende Schritte aufweist:

   Messen einer jeweiligen von wenigstens einem Nachbarnetzwerkknoten des spezifischen Netzwerkknotens erzeugten Netzwerklast,
   Empfangen von Informationen, die sich auf die maximale Aggregationsverzögerung des wenigstens einen Nachbarnetzwerkknotens beziehen,
   Berechnen eines Belegungsverhältnisses des wenigstens einen Nachbarnetzwerkknotens als Beziehung zwischen dem Kanalbelegungsbruchteil und der maximalen Aggregationsverzögerung des wenigstens einen Nachbarnetzwerkknotens.

8. Verfahren nach Anspruch 7, welches ferner folgende Schritte aufweist:

   Berechnen einer Verhältnisdifferenz unter Verwendung der folgenden Formel:

   ```
   Verhältnisdifferenz = 1 – Belegungsverhältnis_nb-
   /Belegungsverhältnis_eigen,
   ```

   wobei Belegungsverhältnis_nb der Durchschnittswert des Belegungsverhältnisses aller Nachbarnetzwerkknoten ist und Belegungsverhältnis_eigen das Belegungsverhältnis des spezifischen Netzwerkknotens ist, und
   Anpassen der maximalen Aggregationsverzögerung des spezifischen Netzwerkknotens entsprechend der Verhältnisdifferenz.

9. Verfahren nach einem der Ansprüche 1 bis 8, wobei die optimale Aggregationsverzögerung auf der Grundlage der sich auf die Kanalqualität beziehenden Parameter unter Verwendung eines Fuzzy-Logik-Systems abgeleitet wird.

10. Verfahren nach einem der Ansprüche 1 bis 9, wobei das drahtlose Netzwerk dafür eingerichtet ist, eine Einzel-Sprung- oder Mehr-Sprung-Kommunikation anzuwenden.

**11.** System zum dynamischen Ableiten einer Aggregationsverzögerung für eine Paketaggregation in einem drahtlosen Netzwerk, welches Folgendes aufweist:

eine Steuereinrichtung zum Ableiten einer optimalen Aggregationsverzögerung an einem Netzwerkknoten abhängig von Informationen, die sich auf die sich auf die Kanalqualität beziehenden Parameter am Netzwerkknoten im drahtlosen Netzwerk beziehen,
wobei die Informationen, die sich auf sich auf die Kanalqualität beziehende Parameter beziehen, im auf der drahtlosen Umgebung beruhenden Netzwerkknoten gemessen werden, und
wobei die Informationen, die sich auf sich auf die Kanalqualität beziehende Parameter beziehen, Kanallastberichte einschließen, die Informationen in Bezug auf eine aktuelle Netzwerklast aufweisen.

**12.** System nach Anspruch 11, welches ferner einen Aggregator zum Aggregieren mehrerer normaler Datenpakete zu aggregierten Paketen, einen Deaggregator zum Deaggregieren aggregierter Pakete zu den mehreren normalen Datenpaketen und eine drahtlose Ein-/Ausgabevorrichtung, die mit dem Aggregator und dem Deaggregator verbunden ist, aufweist.

**13.** System nach Anspruch 12, wobei die Steuereinrichtung die Informationen in Bezug auf die optimale Aggregationsverzögerung dem Aggregator bereitstellt, wobei die Steuereinrichtung Informationen in Bezug auf die aktuelle Netzwerklast von der drahtlosen Ein-/Ausgabevorrichtung empfängt und wobei die Steuereinrichtung dafür ausgelegt ist, eine Änderung der aktuellen Netzwerklast, vorzugsweise eine Änderung des Kanalbelegungsbruchteils, zu überwachen und die optimale Aggregationsverzögerung ansprechend auf eine Änderung der aktuellen Netzwerklast bzw. eine Änderung des Kanalbelegungsbruchteils anzupassen.

**14.** System nach einem der Ansprüche 11 bis 13, welches ferner Folgendes aufweist:

eine Austauschvorrichtung zum Austauschen gemessener Kanalqualitätsparameter mit wenigstens einem Nachbarnetzwerkknoten, wobei die Steuereinrichtung dafür ausgelegt ist, einen Fairness-Faktor zu bestimmen, der für das Ableiten der im Aggregator festzulegenden Aggregationsverzögerung zu verwenden ist.

**15.** System nach Anspruch 13 oder 14, wobei die Steuereinrichtung dafür ausgelegt ist, ein Belegungsverhältnis des spezifischen Knotens als eine Beziehung zwischen dem Kanalbelegungsbruchteil und der aktuellen Aggregationsverzögerung zu berechnen und wobei die Steuereinrichtung vorzugsweise dafür ausgelegt ist, Informationen in Bezug auf eine jeweilige von wenigstens einem Nachbarnetzwerkknoten erzeugte Netzwerklast zu empfangen und Informationen in Bezug auf die maximale Aggregationsverzögerung des wenigstens einen Nachbarnetzwerks zu empfangen und ein Belegungsverhältnis des wenigstens einen Nachbarnetzwerkknotens als Beziehung zwischen dem Kanalbelegungsbruchteil und der maximalen Aggregationsverzögerung des wenigstens einen Nachbarnetzwerkknotens zu berechnen.

**16.** System nach Anspruch 15, wobei die Steuereinrichtung ferner dafür ausgelegt ist, eine Verhältnisdifferenz unter Verwendung der folgenden Formel zu berechnen:

```
Verhältnisdifferenz = 1 - Belegungsverhältnis_nb-
/Belegungsverhältnis_eigen,
```

wobei Belegungsverhältnis_nb der Durchschnittswert des Belegungsverhältnisses aller Nachbarnetzwerkknoten ist und Belegungsverhältnis_eigen das Belegungsverhältnis des spezifischen Netzwerkknotens ist, und die maximale Aggregationsverzögerung des spezifischen Netzwerkknotens entsprechend der Verhältnisdifferenz anzupassen.

**17.** System nach einem der Ansprüche 11 bis 16, wobei die Steuereinrichtung ferner ein Fuzzy-Logik-System aufweist, das die optimale Aggregationsverzögerung auf der Grundlage der Kanalqualitätsparameter ableitet.

**Revendications**

**1.** Procédé de dérivation dynamique d'un retard d'agrégation pour une agrégation de paquets dans un réseau sans fil comprenant l'étape suivante ;

dérivation d'un retard d'agrégation optimal au niveau d'un noeud de réseau selon des informations relatives à des paramètres liés à une qualité de canal au niveau du noeud de réseau dans le réseau sans fil, à l'aide d'un dispositif de commande ;
dans lequel les informations relatives à des paramètres liés à une qualité de canal sont mesurées dans le noeud de réseau à base d'environnement sans fil ; et
dans lequel les informations relatives à des paramètres liés à une qualité de canal comprennent des rapports de charge de canal comprenant des informations concernant une charge de réseau actuelle.

2. Procédé selon la revendication 1, dans lequel le noeud de réseau à base d'environnement sans fil est basé sur la norme IEEE 802.11.

3. Procédé selon la revendication 2, dans lequel les informations concernant une charge de réseau actuelle comprennent une fraction de canaux occupés, et dans lequel de préférence les paramètres liés à une qualité de canal sont basés sur la norme IEEE 802.11 k.

4. Procédé selon la revendication 3, comprenant en outre les étapes :

de surveillance d'un changement de la charge de réseau actuelle, de préférence d'un changement de la fraction de canaux occupés, et
d'adaptation du retard d'agrégation optimal en réponse à un changement de la charge de réseau actuelle et un changement de la fraction de canaux occupés, respectivement.

5. Procédé selon l'une quelconque des revendications 1 à 4, comprenant en outre l'étape d'échange de paramètres de qualité de canal mesurés entre des noeuds de réseau et de détermination d'un facteur d'équité à utiliser pour dériver le retard d'agrégation pour un noeud de réseau spécifique.

6. Procédé selon l'une quelconque des revendications 3 à 5, comprenant en outre l'étape de :

calcul d'un rapport d'occupation du noeud de réseau spécifique en tant que relation entre la fraction de canaux occupés du noeud de réseau spécifique et le retard d'agrégation actuel dudit noeud de réseau spécifique.

7. Procédé selon la revendication 6, comprenant en outre les étapes de :

mesure d'une charge de réseau respective générée par au moins un noeud de réseau voisin dudit noeud de réseau spécifique,
réception d'informations relatives au retard d'agrégation maximal dudit au moins un noeud de réseau voisin,
calcul d'un rapport d'occupation dudit au moins un noeud de réseau voisin en tant que relation entre la fraction de canaux occupés et le retard d'agrégation maximal dudit au moins un noeud de réseau voisin.

8. Procédé selon la revendication 7, comprenant en outre les étapes :

de calcul d'une différence de rapport en utilisant la formule suivante :

$$\text{différencerapport} = 1 - \text{nb\_rapportoccupation}/\text{propre\_rapportoccupation}$$

dans lequel nb_rapportoccupation est la valeur moyenne du rapport d'occupation de tous les noeuds de réseau voisins et propre_rapportoccupation est le rapport d'occupation du noeud de réseau spécifique, et
d'adaptation du retard d'agrégation maximal du noeud de réseau spécifique correspondant à la différence de rapport.

9. Procédé selon l'une quelconque des revendications 1 à 8, dans lequel le retard d'agrégation optimal est dérivé d'après les paramètres liés à une qualité de canal à l'aide d'un système de logique floue.

10. Procédé selon l'une quelconque des revendications 1 à 9, dans lequel le réseau sans fil est adapté pour appliquer une communication à saut unique ou multisaut.

**11.** Système de dérivation dynamique d'un retard d'agrégation pour une agrégation de paquets dans un réseau sans fil comprenant :

un dispositif de commande pour dériver un retard d'agrégation optimal au niveau d'un noeud de réseau selon des informations relatives aux paramètres liés à une qualité de canal au niveau du noeud de réseau dans le réseau sans fil ;

dans lequel les informations relatives à des paramètres liés à une qualité de canal sont mesurées dans le noeud de réseau à base d'environnement sans fil ; et

dans lequel les informations relatives à des paramètres liés à une qualité de canal comprennent des rapports de charge de canal comprenant des informations concernant une charge de réseau actuelle.

**12.** Système selon la revendication 11, comprenant en outre un agrégateur pour agréger une pluralité de paquets de données normaux en paquets agrégés,

un désagrégateur pour la désagrégation de paquets agrégés en ladite pluralité de paquets de données normaux, et

un dispositif d'entrée/de sortie sans fil qui est connecté à l'agrégateur et au désagrégateur.

**13.** Système selon la revendication 12, dans lequel le dispositif de commande fournit des informations concernant le retard d'agrégation optimal à l'agrégateur, dans lequel le dispositif de commande reçoit des informations concernant la charge de réseau actuelle en provenance du dispositif d'entrée/de sortie sans fil et dans lequel le dispositif de commande est configuré pour surveiller un changement de la charge de réseau actuelle, de préférence un changement de la fraction de canaux occupés et pour adapter le retard d'agrégation optimal en réponse à un changement de la charge de réseau actuelle et un changement de la fraction de canaux occupés, respectivement.

**14.** Système selon l'une quelconque des revendications 11 à 13, comprenant en outre

un dispositif d'échange pour échanger des paramètres de qualité de canal mesurés avec au moins un noeud de réseau voisin et dans lequel le dispositif de commande est configuré pour déterminer un facteur d'équité à utiliser pour dériver le retard d'agrégation à établir dans l'agrégateur.

**15.** Système selon la revendication 13 ou 14, dans lequel le dispositif de commande est configuré pour calculer un rapport d'occupation du noeud spécifique en tant que relation entre la fraction de canaux occupés et le retard d'agrégation actuel et dans lequel de préférence, le dispositif de commande est configuré pour recevoir des informations concernant une charge de réseau respective générée par au moins un noeud de réseau voisin et pour recevoir des informations relatives au retard d'agrégation maximal dudit au moins un réseau voisin et pour calculer un rapport d'occupation dudit au moins un noeud de réseau voisin en tant que relation entre la fraction de canaux occupés et le retard d'agrégation maximal dudit au moins un noeud de réseau voisin.

**16.** Système selon la revendication 15, dans lequel le dispositif de commande est en outre configuré pour calculer une différence de rapport en utilisant la formule suivante :

$$\text{différencerapport} = 1 - \text{nb\_rapportoccupation}/\text{propre\_rapportoccupation}$$

dans lequel nb_rapportoccupation est la valeur moyenne du rapport d'occupation de tous les noeuds de réseau voisins et propre_rapportoccupation est le rapport d'occupation du noeud de réseau spécifique, et pour adapter le retard d'agrégation maximal dudit noeud de réseau spécifique correspondant à la différence de rapport.

**17.** Système selon l'une quelconque des revendications 11 à 16, dans lequel le dispositif de commande comprend un système de logique floue qui dérive le retard d'agrégation optimal d'après les paramètres de qualité de canal.

HDR = MAC header
AH = aggregation header

Fig. 1

Aggregation
queue length
*queuelen*

Max.
*queuelen_max*

Selected
*queuelen_max*

Selection
region

*delay_max*  Time
t

Fig. 2

Aggregation
queue length
queue_len

Selection
region
dD

*queuelen_max*

Selected    Max.    Time
*delay_max*  *delay_max*  t

Fig. 3

EP 2 400 792 B1

Fig. 4

Fig. 5

Fig. 6

(a) *busyfraction*

(b) Δ*busyfraction*

(c) *ratiodifference*

(d) Δ*delay<sub>MAX</sub>*

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1492285 B1
- US 20070211682 A1
- WO 2005112355 A1
- EP 1465368 B1

### Non-patent literature cited in the description

- **JOHN, WOLFGANG ; TAFVELIN, SVEN.** Analysis of internet backbone traffic and header anomalies observed. ACM, 2007, 111-116
- Link-Based VoIP Aggregation in Mesh Networks. **OKECH J. et al.** New Technologies, Mobility and Security, 2008, NTMS 2008. IEEE, 05 November 2008, 1-5
- VoMesh: voice over wireless mesh networks. **KYUNGTAE KIM et al.** wireless communications and networking conference, 2006, WCNC 2006. IE EE, 03 April 2006, 193-198
- **BAYER et al.** VoIP Service Performance Optimization in Pre-IEEE 802.11 S Wireless Mesh Networks. *Circuits and Systems for communications, 2008, ICCSC 2008, 4th IEEE International Conference on,* 75-79
- **KASSLER et al.** VoIP aggregation based on link quality metric for multihop wireless mesh networks. *Proceedings of the future telecommunication conference,* 01 October 2007, 1-6